# EUROPÄISCHE PATENTSCHRIFT

(11) **EP 4 073 417 B1**
(45) Veröffentlichungstag und Bekanntmachung des Hinweises auf die Patenterteilung: **29.01.2025**
(21) Anmeldenummer: 20776143.8
(22) Anmeldetag: 22.09.2020
(51) Int. Cl.: F17C 13/12

(54) **ENERGIESPEICHERANORDNUNG FÜR EIN KRAFTFAHRZEUG**
ENERGY STORAGE ASSEMBLY FOR A MOTOR VEHICLE
ENSEMBLE DE STOCKAGE D'ÉNERGIE POUR VÉHICULE AUTOMOBILE

(43) Veröffentlichungstag der Anmeldung: 19.10.2022
(73) Patentinhaber: Audi AG, 85045 Ingolstadt (DE)
(72) Erfinder: STOLL, Oliver, 69429 Ingolstadt (DE); MOLDERING, Florian, 74172 Neckarsulm (DE); MLEKUSCH, Bernd, 9300 Sankt Veit/Gland (AT); MEYER, Jannik, 49163 Bohmte (DE)
(86) Internationale Anmeldenummer: PCT/EP2020/076416
(87) Internationale Veröffentlichungsnummer: WO 2022/063392

(56) Entgegenhaltungen:
- DE-A1- 10 335 245
- DE-A1- 102013 220 421
- DE-A1- 102016 220 148

## Beschreibung

Die Erfindung betrifft eine Energiespeicheranordnung für ein Kraftfahrzeug mit wenigstens einer Energiespeichereinrichtung zur Speicherung von Brennstoff oder elektrischer Energie.

Eine Energiespeichereinrichtung kann ein Kraftstofftank, insbesondere ein Drucktank, sein. Eine Energiespeichereinrichtung im Sinne der hier betreffenden Erfindung ist jedoch eine Traktionsbatterie, wie nachfolgend noch näher erläutert.

Bei der Kollision eines Kraftfahrzeugs, womit insbesondere ein Verkehrsunfall mit einem anderen Kraftfahrzeug oder einem Hindernis gemeint ist (hierzu gehört auch das Aufsetzen des Kraftfahrzeugs auf ein Bodenhindernis), kann es infolge einer äußeren Krafteinwirkung zu Beschädigungen oder Vorbeschädigungen der Energiespeichereinrichtung kommen. Solche Beschädigungen oder Vorbeschädigungen werden häufig nicht bemerkt oder bleiben unentdeckt und können dann im Weiteren zu erheblichen Folgeschäden führen.

Die DE 10 2015 225 348 A1 beschreibt einen Druckbehälter zur Speicherung von Brennstoff in einem Kraftfahrzeug. Der Druckbehälter (10) weist einen Schichtaufbau (11) auf. Im Schichtaufbau (11) ist ein Detektionsstoff (15) eingelagert. Bevorzugt ist der Detektionsstoff (15) ein Geruchsstoff. Der Detektionsstoff (15) und der Schichtaufbau (11) sind so ausgebildet, dass aus dem Schichtaufbau (11) mehr Detektionsstoff (15) entweicht, wenn eine Beschädigung des Schichtaufbaus (11) vorliegt. Dadurch können Beschädigungen am Druckbehälter (10) vergleichsweise einfach erfasst werden.

Die DE 103 35 245 A1 beschreibt ein Kryotank-System zum Speichern von Brennstoff in tiefkaltem Zustand. Das Kryotank-System ist mit einem Innenraum zum Aufnehmen des Brennstoffs und einer den Innenraum umgebenden Isolationsschicht versehen. Zwischen dem Innenraum und der Isolationsschicht ist eine gasdicht abgeschlossene Prüfschicht ausgebildet. Ferner ist eine Prüfeinrichtung zum Überwachen des Drucks innerhalb der Prüfschicht vorgesehen. Alternativ oder zusätzlich ist um die Isolationsschicht herum eine zweite gasdicht abgeschlossene Prüfschicht ausgebildet und eine zweite Prüfeinrichtung zum Überwachen des Drucks innerhalb der zweiten Prüfschicht vorgesehen.

Die erfindungsgemäße Energiespeicheranordnung des Patentanspruchs 1 ermöglicht bei vergleichsweise einfachem und kostengünstigem Aufbau ein zuverlässiges Erkennen von Kollisionen, sodass im Weiteren wenigstens eine Schutzmaßnahme veranlasst werden kann. Dadurch werden einerseits die Sicherheit verbessert beziehungsweise erhöht und andererseits mögliche Folgekosten (wie beispielsweise Inspektionskosten oder Instandsetzungskosten) verringert. Zusätzliche Merkmale der Erfindung ergeben sich aus den abhängigen Patentansprüchen, der nachfolgenden Erfindungsbeschreibung und den Figuren.

Die erfindungsgemäße Energiespeicheranordnung umfasst wenigstens die folgenden Komponenten, die jeweils auch mehrfach vorhandenen sein können:
- (wenigstens) eine Energiespeichereinrichtung, nämlich eine Traktionsbatterie zur Speicherung von elektrischer Energie;
- (wenigstens) ein mit Gas oder Flüssigkeit gefülltes flexibles Druckelement, welches außen an der Energiespeichereinrichtung angeordnet ist oder welches auf der Innenseite eines Abdeckungsbauteils für die Energiespeichereinrichtung angeordnet ist;
- (wenigstens) einen mit dem flexiblen Druckelement verbundenen Drucksensor, mit dem kollisionsbedingte Druckschwankungen im flexiblen Druckelement erfassbar sind beziehungsweise erfasst werden können.

Mit der erfindungsgemäßen Energiespeicheranordnung kann eine Kollision, die insbesondere nur lokal im Bereich der Energiespeichereinrichtung erfolgt und die möglicherweise zu einer Beschädigung der Energiespeichereinrichtung führt, erfasst beziehungsweise detektiert werden. Die erfindungsgemäße Energiespeicheranordnung verfügt somit über eine Kollisionserkennung beziehungsweise Kollisionserfassung. Bei einer detektierten Kollision kann dann wenigstens eine Schutzmaßnahme zur Gefahrenabwehr beziehungsweise zum Schutz der Energiespeichereinrichtung und des Kraftfahrzeugs, von Personen und/oder der Umgebung veranlasst werden.

Eine Energiespeichereinrichtung ist eine Fahrbatterie beziehungsweise eine Traktionsbatterie zur Speicherung von elektrischer Energie für einen elektrischen Fahrantrieb.

Die erfindungsgemäße Energiespeicheranordnung ist somit bevorzugt Bestandteil eines Kraftfahrzeugs, insbesondere eines Personenkraftwagens oder eines leichten Nutzfahrzeugs, mit elektrischem Antrieb (Fahrantrieb) beziehungsweise wird für ein solches Kraftfahrzeug verwendet. Die Erfindung betrifft somit, zumindest indirekt, auch ein Kraftfahrzeug mit einem solchen Antrieb oder einem entsprechenden Hybridantrieb und mit wenigstens einer erfindungsgemäßen Energiespeicheranordnung.

Das flexible Druckelement weist eine zumindest bereichsweise flexible, insbesondere flexibel elastische, Hülle auf, die mit einem Gas (hierzu gehört auch ein Gasgemisch, wie insbesondere Luft) oder mit einer Flüssigkeit gefüllt ist, wobei die Hülle quasi ein hermetisch abgeschlossenes Volumenbegrenzungselement für das Gas oder die Flüssigkeit bildet. Das flexible Druckelement kann auch als gasgefülltes oder flüssigkeitsgefülltes flexibles Druckelement bezeichnet werden. Das Gas oder die Flüssigkeit ist bevorzugt nicht brennbar und/oder umweltgefährdend. Unter "flexibel" wird verstanden, dass die Hülle nicht starr, sondern nachgiebig ist. Die flexible Hülle ist bevorzugt aus einem thermoplastischen Kunststoff, beispielsweise aus Polypropylen (PP) oder Polyethylen (PE), aus einem Elastomer, aus einem Silikon oder dergleichen gebildet und kann zudem eine Sperrschicht und/oder eine Gewebeverstärkung aufweisen. Die Hülle weist bevorzugt eine Wanddicke beziehungsweise eine Wandstärke von 0,1 mm bis 1,0 mm auf. Durch eine äußere Krafteinwirkung auf die flexible beziehungsweise nachgiebige Hülle, insbesondere in Folge einer Kollision, entstehen im Inneren des Druckelements, also in dem Gas oder in der Flüssigkeit, Druckschwankungen beziehungsweise Druckwellen, die mithilfe wenigstens eines Drucksensors erfasst werden können.

Der wenigstens eine Drucksensor der erfindungsgemäßen Energiespeicheranordnung ist insbesondere dazu ausgebildet, den Druck (Innendruck) im Inneren des flexiblen Druckelements (das heißt den Gasdruck beziehungsweise den Flüssigkeitsdruck) zu erfassen beziehungsweise zu messen und entsprechende Messwerte, insbesondere in Form elektrischer Signale, zu generieren.

Das flexible Druckelement kann außen an der Energiespeichereinrichtung angeordnet sein, vorzugsweise derart, dass die Energiespeichereinrichtung zumindest lokal, insbesondere in wenigstens einem schädigungsgefährdeten Bereich, abgedeckt ist, und insbesondere derart, dass die Energiespeichereinrichtung von dem flexiblen Druckelement im Wesentlichen vollumfänglich abgedeckt beziehungsweise umschlossen ist. Dies ermöglicht je nach dem eine lokale oder eine umfassende Überwachung der Energiespeichereinrichtung. Das flexible Druckelement ist in geeigneter Weise an der Energiespeichereinrichtung befestigt. Selbsterklärend können auch mehrere flexible Druckelemente vorgesehen sein, welche die Energiespeichereinrichtung teilweise oder vollumfänglich abdecken. Bei einer Kollision werden im flexiblen Druckelement Druckschwankungen beziehungsweise Druckwellen erzeugt, wie oben beschrieben.

Das flexible Druckelement kann auch auf der Innenseite eines Abdeckungsbauteils oder dergleichen für die Energiespeichereinrichtung angeordnet sein, welches die Energiespeichereinrichtung zumindest teilweise umgibt. Die Innenseite ist eine der Energiespeichereinrichtung zugewandte Seite oder Fläche des Abdeckungsbauteils. Das flexible Druckelement ist in geeigneter Weise am Abdeckungsbauteil befestigt, wobei an einem Abdeckungsbauteil auch mehrere flexible Druckelemente angeordnet und in geeigneter Weise befestigt sein können. Das Abdeckungsbauteil ist bevorzugt ein (flächiges) Blechbauteil oder ein flächiges Kunststoffbauteil, insbesondere mit Faserverstärkung. Das Abdeckungsbauteil dient nicht nur als Träger für das flexible Druckelement, sondern bietet zudem einen mechanischen Schutz für die Energiespeichereinrichtung (Schutzblecheffekt). Bevorzugt ist das Abdeckungsbauteil Bestandteil einer Heckverkleidung oder Unterbodenverkleidung des Kraftfahrzeugs. Das Abdeckungsbauteil kann an der Energiespeichereinrichtung anliegen, sodass sich das flexible Druckelement direkt zwischen der Energiespeichereinrichtung und dem Abdeckungsbauteil befindet. Das Abdeckungsbauteil kann auch mit Abstand zur Energiespeichereinrichtung angeordnet sein, wobei der Abstand bevorzugt 5 mm bis 50 mm und insbesondere 10 mm bis 30 mm beträgt. Bei einer Kollision wird das Abdeckungsbauteil gegen die Energiespeichereinrichtung gedrückt, wodurch im flexiblen Druckelement Druckschwankungen beziehungsweise Druckwellen erzeugt werden, wie oben beschrieben.

Bei beiden zuvor beschriebenen Ausführungsmöglichkeiten der Erfindung ist das wenigstens eine flexible Druckelement quasi im unmittelbaren Umfeld der Energiespeichereinrichtung angeordnet.

Das flexible Druckelement ist bevorzugt als (flexibles) Druckkissen ausgebildet. Die Hülle eines solchen Druckkissens besteht vorzugsweise aus zwei flexiblen, insbesondere flexibel elastischen, Flächenteilen, die an ihren Kanten miteinander verbunden sind. Für die Herstellung des Druckkissens kann insbesondere ein thermoplastisches Folienmaterial verwendet werden, welches doppelt übereinandergelegt und an den Kanten verschweißt wird. Das Druckkissen ist mit Gas oder Flüssigkeit gefüllt. Bevorzugt weist das Drucckissen eine maximale Dicke von 10 mm auf, sodass nur ein geringer Bauraum benötigt wird.

Das Druckkissen kann segmentiert ausgebildet sein und mehrere mit Gas oder Flüssigkeit gefüllte Kammern aufweisen, wobei eigens für jede Kammer ein Drucksensor vorgesehen ist. Dies ermöglicht die Lokalisierung einer Krafteinwirkung und verringert den Inspektionsaufwand. Ferner kann wenigstens ein zwischen benachbarten Kammern wirksames inneres Druckausgleichsventil vorgesehen sein, welches einen sukzessiven (das heißt einen nur allmählichen beziehungsweise langsamen) Druckausgleich und/oder einen sukzessiven Gasaustausch beziehungsweise Flüssigkeitsaustausch zwischen den Kammern ermöglicht.

Erfindungsgemäß ist das Gas, insbesondere Luft, oder die Flüssigkeit mit atmosphärischem Druck (Umgebungsdruck) im Inneren des flexiblen Druckelements eingeschlossen, sodass kein Druckverlust oder Unterdruckverlust auftreten kann. Das flexible Druckelement kann wenigstens ein äußeres Druckausgleichsventil für einen sukzessiven Druckausgleich und/oder gegebenenfalls auch Luftaustausch mit der Umgebung aufweisen. Bei mehreren Kammern ist bevorzugt wenigstens ein äußeres Druckausgleichsventil pro Kammer vorgesehen oder nur ein einzelnes äußeres Druckausgleichsventil sowie wenigstens ein inneres Druckausgleichsventil.

Der Drucksensor kann direkt am flexiblen Druckelement angeordnet (und in geeigneter Weise angeschlossen) sein. Der Drucksensor kann dann beispielsweise am Abdeckungsbauteil befestigt sein. Bevorzugt ist der Drucksensor beabstandet vom flexiblen Druckelement angeordnet und ist über eine Leitung mit dem flexiblen Druckelement (oder gegebenenfalls einer Kammer des Druckkissens) verbunden beziehungsweise am flexiblen Druckelement (oder der betreffenden Kammer) angeschlossen. Insbesondere ist vorgesehen, dass die Leitung an einem ihrer Enden am flexiblen Druckelement angeschlossen ist, welches hierzu bevorzugt mit einem Leitungsanschluss ausgebildet ist, und dass der Drucksensor am anderen Ende der Leitung angeschlossen ist. Insbesondere ist jeweils ein lösbarer Anschluss vorgesehen. Um durch die Leitung verursachte Fehlmessungen zu verhindern, kann diese als druckfeste Leitung, insbesondere als Stahlflexleitung oder dergleichen, ausgebildet sein.

Die erfindungsgemäße Energiespeicheranordnung kann ferner umfassen:
- eine Steuereinrichtung beziehungsweise ein Steuergerät, die dazu ausgebildet ist, selbsttätig die (fortwährend erfassten) Messwerte des Drucksensors auszuwerten und bei einer Kollision (die zu unzulässigen kollisionsbedingten Druckschwankungen führt), wenigstens eine Schutzmaßnahme zu veranlassen beziehungsweise einzuleiten.

Mögliche Schutzmaßnamen sind beispielsweise das Ausgeben einer Warnmeldung an den Fahrer (zum Beispiel "Dringend Werkstatt aufsuchen!"), das Ausschalten des Fahrzeugantriebs, das Verhindern eines Betankungsvorgangs beziehungsweise eines Ladevorgangs und dergleichen.

Die Steuereinrichtung kann ferner dazu ausgebildet sein, aus den Messwerten des Drucksensors auch die Kollisionsstärke zu bestimmen beziehungsweise zu ermitteln und in Abhängigkeit von der ermittelten Kollisionsstärke wenigstens eine angemessene Schutzmaßnahme zu veranlassen beziehungsweise einzuleiten.

Die Steuereinrichtung kann ferner dazu ausgebildet sein, aus den Messwerten mehrerer Drucksensoren, die insbesondere jeweils einer Kammer eines Druckkissens zugeordnet sind, den Bereich oder die Bereiche einer kollisionsbedingten Krafteinwirkung auf die Energiespeichereinrichtung zu lokalisieren. Dies kann dann beispielsweise mittels eines Displays im Fahrzeugcockpit oder an einem Diagnosegerät visualisiert werden.

Die Erfindung wird nachfolgend anhand der Figuren näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in einer schematischen (nicht maßstabsgerechten) Schnittdarstellung eine Energiespeicheranordnung für ein Kraftfahrzeug, mit einem Drucktank als Energiespeichereinrichtung.
- Fig. 2: zeigt in einer schematischen (nicht maßstabsgerechten) Schnittdarstellung eine erfindungsgemäße Energiespeicheranordnung für ein Kraftfahrzeug, mit einer Traktionsbatterie als Energiespeichereinrichtung.

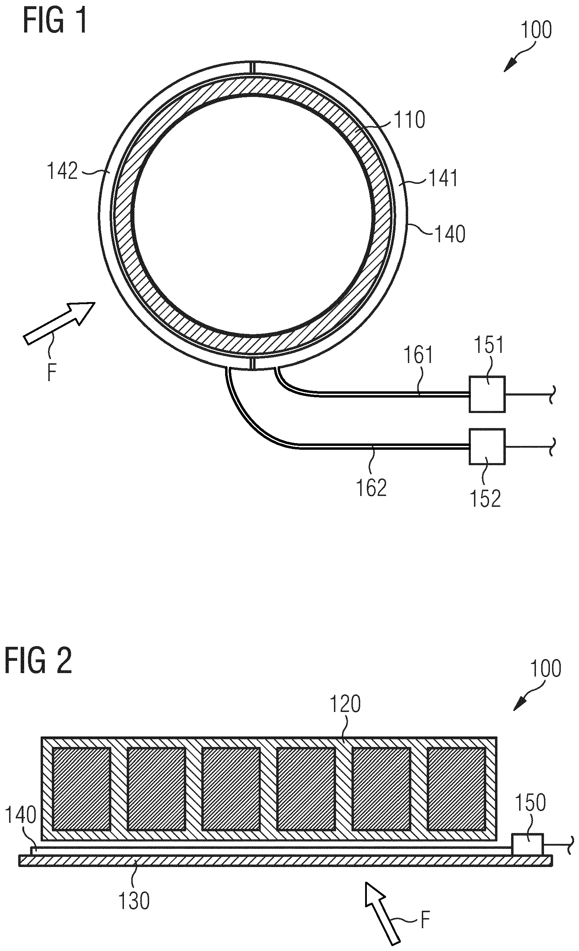

Die in Fig. 1 gezeigte Energiespeicheranordnung 100 umfasst einen Drucktank 110 mit einer starren Tankwandung und ein als Druckkissen ausgebildetes flexibles Druckelement 140. Der Drucktank 110 kann in bekannter Weise aus einem Liner (Innenhülle) und einer Faserummantelung (Außenhülle) gebildet sein. Das flexible Druckelement 140 ist außen am Drucktank 110 angeordnet, sodass der Drucktank 110, zumindest abschnittsweise im besonders schädigungsgefährdeten zylindrischen Bereich, vollumfänglich abgedeckt ist. Das den Drucktank 110 umhüllende flexible Druckelement 140 weist zwei Kammern 141, 142 auf, die jeweils mit Gas, insbesondere Luft, oder Flüssigkeit gefüllt sind, wobei auch mehr als zwei Kammern vorgesehen sein können. Das flexible Druckelement beziehungsweise Druckkissen 140 kann mit Schellen, Spannbändern oder dergleichen lösbar am Drucktank 110 befestigt sein.

Bei einer Krafteinwirkung F infolge einer Kollision, wobei es sich typischerweise um eine Stoßbelastung handelt, werden in wenigstens einer der Kammern 141, 142 Druckschwankungen erzeugt (wie oben erläutert). Diese Druckschwankungen können mithilfe der über Leitungen 161, 162 angeschlossenen Drucksensoren 151, 152 erfasst beziehungsweise gemessen werden, woraufhin wenigstens eine Schutzmaßnahme veranlasst werden kann. Die Drucksensoren 151, 152 sind an geeigneten Stellen in der Nähe des Drucktanks 110 angeordnet und mit einer nicht gezeigten Steuereinrichtung verbunden. (Die Verbindung der Drucksensoren 151, 152 mit der Steuereinrichtung kann über ein fahrzeugseitiges Bussystem, beispielsweise einen CAN-Bus, erfolgen.) Das als Druckkissen ausgebildete flexible Druckelement 140 ermöglicht eine umfassende und lückenlose Detektion von Krafteinwirkungen F auf den Drucktank 110. Die Kammern 141, 142 und die diesen Kammern 141, 142 zugeordneten Drucksensoren 151, 152 ermöglichen zudem eine zumindest ungefähre Lokalisierung der Krafteinwirkung F.

Die in Fig. 2 gezeigte Energiespeicheranordnung 100 umfasst eine Traktionsbatterie 120, mit einem starren Gehäuse und darin angeordneten Batteriezellen, und ein Abdeckungsbauteil 130, wobei auch mehrere Abdeckungsbauteile vorgesehen sein können. Bei dem Abdeckungsbauteil 130 handelt es sich beispielsweise um einen Unterfahrschutz. Auf der Innenseite des Abdeckungsbauteils 130, die der Traktionsbatterie 120 zugewandt ist, befindet sich ein als Druckkissen ausgebildetes flexibles Druckelement 140, welches mit Gas, insbesondere Luft, oder Flüssigkeit gefüllt ist. (Das Druckkissen 140 kann ebenfalls mehrere Kammern aufweisen.) Das Druckkissen 140 kann auf die Innenseite des Abdeckungsbauteils 130 aufgeklebt sein.

Direkt am Druckkissen 140 ist ein Drucksensor 150 angeordnet, der am Abdeckungsbauteil 130 befestigt ist. (Der Drucksensor 150 kann auch beabstandet zum Druckkissen 140 angeordnet und mittels Leitung mit dem Druckkissen 140 verbunden sein.) Die bei kritischer Krafteinwirkung F auf das Abdeckbauteil 130 im flexiblen Druckelement beziehungsweise Drucckissen 140 entstehenden Druckschwankungen können mithilfe des Drucksensors 150 erfasst beziehungsweise gemessen werden, woraufhin wenigstens eine Schutzmaßnahme veranlasst werden kann.

## Patentansprüche

1. Energiespeicheranordnung (100) für ein Kraftfahrzeug, wenigstens umfassend:
- eine Traktionsbatterie (120) zur Speicherung von elektrischer Energie;
- ein mit Gas oder Flüssigkeit gefülltes flexibles Druckelement (140), welches außen an der Traktionsbatterie (120) oder auf der Innenseite eines Abdeckungsbauteils (130) für die Traktionsbatterie (120) angeordnet ist, wobei das Gas oder die Flüssigkeit mit atmosphärischem Druck im Inneren des flexiblen Druckelements (140) eingeschlossen ist;
- einen mit dem flexiblen Druckelement (140) verbundenen Drucksensor (150, 151, 152), mit dem kollisionsbedingte Druckschwankungen im flexiblen Druckelement (140) erfassbar sind.

2. Energiespeicheranordnung (100) nach Anspruch 1,
**dadurch gekennzeichnet, dass**
das flexible Druckelement (140) als Druckkissen ausgebildet ist.

3. Energiespeicheranordnung (100) nach Anspruch 2,
**dadurch gekennzeichnet, dass**
das Druckkissen (140) eine maximale Dicke von 10 mm aufweist.

4. Energiespeicheranordnung (100) nach Anspruch 2 oder 3,
**dadurch gekennzeichnet, dass**
das Druckkissen (140) segmentiert ausgebildet ist und mehrere mit Gas oder Flüssigkeit gefüllte Kammern (141, 142) aufweist, wobei für jede Kammer (141, 142) ein Drucksensor (151, 152) vorgesehen ist.

5. Energiespeicheranordnung (100) nach einem der vorhergehenden Ansprüche,
**dadurch gekennzeichnet, dass**
das flexible Druckelement (140) wenigstens ein Druckausgleichsventil für einen Druckausgleich mit der Umgebung aufweist.

6. Energiespeicheranordnung (100) nach einem der vorhergehenden Ansprüche 1 bis 5,
**dadurch gekennzeichnet, dass**
der Drucksensor (150) direkt am flexiblen Druckelement (140) angeordnet ist.

7. Energiespeicheranordnung (100) nach einem der vorhergehenden Ansprüche 1 bis 5,
**dadurch gekennzeichnet, dass**
der Drucksensor (151, 152) beabstandet vom flexiblen Druckelement (140) angeordnet und über eine Leitung (161, 162) mit dem flexiblen Druckelement (140) verbunden ist.

8. Energiespeicheranordnung (100) nach einem der vorhergehenden Ansprüche, ferner umfassend:
- eine Steuereinrichtung, die dazu ausgebildet ist, selbsttätig die Messwerte des Drucksensors (150, 151, 152) auszuwerten und bei einer Kollision wenigstens eine Schutzmaßnahme einzuleiten.

9. Energiespeicheranordnung (100) nach einem der vorhergehenden Ansprüche,
**dadurch gekennzeichnet, dass**
diese Energiespeicheranordnung (100) Bestandteil eines Kraftfahrzeugs mit elektrischem Antrieb ist.

## Claims

1. Energy storage assembly (100) for a motor vehicle, comprising at least:
- a traction battery (120) for storing electrical energy,
- a flexible pressure element (140) filled with gas or liquid, which is arranged on the outside of the traction battery (120) or on the inside of a cover component (130) for the traction battery (120), wherein the gas or liquid is trapped inside the flexible pressure element (140) by atmospheric pressure,
- a pressure sensor (150, 151, 152) connected to the flexible pressure element (140), by means of which collision-induced pressure fluctuations in the flexible pressure element (140) can be detected.

2. Energy storage assembly (100) according to claim 1,
**characterized in that**
the flexible pressure element (140) is designed as a pressure pad.

3. Energy storage assembly (100) according to claim 2,
**characterized in that**
the pressure pad (140) has a maximum thickness of 10 mm.

4. Energy storage assembly (100) according to claim 2 or 3,
**characterized in that**
the pressure pad (140) is designed to be segmented and has a plurality of chambers (141, 142) filled with gas or liquid, wherein a pressure sensor (151, 152) is provided for each chamber (141, 142).

5. Energy storage assembly (100) according to any one of the previous claims,
**characterized in that**
the flexible pressure element (140) has at least one pressure compensation valve for pressure equalization with the environment.

6. Energy storage assembly (100) according to any one of the previous claims 1 to 5,
**characterized in that**
the pressure sensor (150) is arranged directly on the flexible pressure element (140).

7. Energy storage assembly (100) according to any one of the previous claims 1 to 5,
**characterized in that**
the pressure sensor (151, 152) is arranged at a distance from the flexible pressure element (140) and is connected by a line (161, 162) to the flexible pressure element (140).

8. Energy storage assembly (100) according to any one of the previous claims, further comprising:
- a control device, which is designed to automatically analyze the readings from the pressure sensor (150, 151, 152) and to initiate at least one protective measure in the event of a collision.

9. Energy storage assembly (100) according to any one of the previous claims,
**characterized in that**
this energy storage assembly (100) is part of a motor vehicle with an electric drive.

## Revendications

1. Agencement de stockage d'énergie (100) pour un véhicule automobile, comprenant au moins :
- une batterie de traction (120) pour le stockage d'énergie électrique ;
- un élément de pression (140) flexible rempli de gaz ou de liquide qui est agencé à l'extérieur au niveau de la batterie de traction (120) ou sur le côté intérieur d'un élément de recouvrement (130) pour la batterie de traction (120), dans lequel le gaz ou le liquide est enfermé à l'intérieur de l'élément de pression (140) flexible par pression atmosphérique ;
- un capteur de pression (150, 151, 152) relié à l'élément de pression (140) flexible, avec lequel des variations de pression dues à la collision dans l'élément de pression flexible (140) peuvent être détectées.

2. Agencement de stockage d'énergie (100) selon la revendication 1,
**caractérisé en ce que**
l'élément de pression (140) flexible est formé comme coussin de pression.

3. Agencement de stockage d'énergie (100) selon la revendication 2,
**caractérisé en ce que**
le coussin de pression (140) présente une épaisseur maximale de 10 mm.

4. Agencement de stockage d'énergie (100) selon la revendication 2 ou 3,
**caractérisé en ce que**
le coussin de pression (140) est formé de manière segmentée et présente plusieurs chambres (141, 142) remplies de gaz ou de liquide, dans lequel un capteur de pression (151, 152) est prévu pour chaque chambre (141, 142).

5. Agencement de stockage d'énergie (100) selon l'une quelconque des revendications précédentes,
**caractérisé en ce que**
l'élément de pression (140) flexible présente au moins une soupape de compensation de pression pour une compensation de pression avec l'environnement.

6. Agencement de stockage d'énergie (100) selon l'une quelconque des revendications précédentes 1 à 5,
**caractérisé en ce que**
le capteur de pression (150) est agencé directement au niveau de l'élément de pression (140) flexible.

7. Agencement de stockage d'énergie (100) selon l'une quelconque des revendications précédentes 1 à 5,
**caractérisé en ce que**
le capteur de pression (151, 152) est agencé à distance de l'élément de pression (140) flexible et est relié par le biais d'une conduite (161, 162) à l'élément de pression (140) flexible.

8. Agencement de stockage d'énergie (100) selon l'une quelconque des revendications précédentes, comprenant de plus :
- un dispositif de commande qui est formé afin d'évaluer automatiquement les valeurs de mesure du capteur de pression (150, 151, 152) et d'introduire au moins une mesure de protection lors d'une collision.

9. Agencement de stockage d'énergie (100) selon l'une quelconque des revendications précédentes,
**caractérisé en ce que**
cet agencement de stockage d'énergie (100) fait partie d'un véhicule automobile à entraînement électrique.
